# EUROPÄISCHE PATENTSCHRIFT

(11) **EP 3 548 755 B1**
(45) Veröffentlichungstag und Bekanntmachung des Hinweises auf die Patenterteilung: **15.07.2020**
(21) Anmeldenummer: 18842515.1
(22) Anmeldetag: 05.12.2018
(51) Int. Cl.: F16B 39/282, F16B 35/06

(54) **GEWINDEELEMENT SOWIE DAMIT HERSTELLBARE VERBINDUNG**
THREADED ELEMENT AND CONNECTION THAT CAN BE ESTABLISHED BY MEANS OF SAME
ÉLÉMENT FILETÉ AINSI QUE RACCORD POUVANT ÊTRE CRÉÉ AVEC CET ÉLÉMENT

(30) Priorität: 21.12.2017 DE 102017131005
(43) Veröffentlichungstag der Anmeldung: 09.10.2019
(73) Patentinhaber: Flaig, Hartmut, 78554 Aldingen (DE)
(72) Erfinder: Flaig, Hartmut, 78554 Aldingen (DE)
(74) Vertreter: Patentanwälte Behrmann Wagner PartG mbB
(86) Internationale Anmeldenummer: PCT/EP2018/083603
(87) Internationale Veröffentlichungsnummer: WO 2019/121006

(56) Entgegenhaltungen:
- CN-U- 206 468 669
- DE-A1- 2 822 928
- RU-C2- 2 594 866
- US-A- 3 895 663
- US-B2- 8 807 896

## Beschreibung

Die Erfindung betrifft ein, bevorzugt als Kaltfließpressteil aus Metall, insbesondere Stahl, ausgebildetes, eine (gedachte) Längsmittelachse aufweisendes Gewindeelement gemäß dem Oberbegriff des Anspruchs 1 mit einem einen Gewindesteigungswinkel aufweisenden Gewinde, wobei das Gewindeelement durch Verdrehen in einer Festziehumfangsrichtung mit einem ein Gegengewinde aufweisenden Verschraubungspartner verschraubbar und dadurch in einer entlang der Längsmittelachse orientierten axialen Richtung (axialen translatorischen, d.h. geradlinigen Verstellrichtung) auf einen Abstützabschnitt, entweder des Verschraubungspartners oder eines davon separaten, axial benachbart zum Gewindeelement angeordneten (bevorzugt zwischen Verschraubungspartner und Gewindeelement klemmbaren) Bauteils, verstellbar ist, und wobei das Gewindeelement einen (axialen) Ringabschnitt zum (axialen) Abstützen auf dem Abstützabschnitt aufweist, und wobei an dem Ringabschnitt Verankerungsmittel zum formschlüssigen Verankern in dem Abstützabschnitt zum Herstellen einer Formschlussverbindung ausgebildet sind, die mehrere in der Festziehumfangsrichtung beabstandete, bevorzugt gleichmäßig in Umfangsrichtung verteilt angeordnete, Umformabschnitte, jeweils umfassend eine sich in axialer Richtung und bevorzugt in radialer Richtung erstreckende, (untere) Umformkante aufweisen, wobei in der Festziehumfangsrichtung vor den Umformabschnitten jeweils eine Vertiefung zur Aufnahme von mittels des jeweiligen Umformabschnittes umgeformtem Abstützabschnittsmaterial angeordnet ist, wobei die Vertiefungen jeweils auf einer dem zugehörigen Umformabschnitt in der Festziehumfangsrichtung gegenüberliegenden Umfangsseite von einer Wand begrenzt sind, die einen entgegen der Festziehrichtung nach oben entgegen der axialen Richtung ansteigenden, als Rampe ausgebildeten ersten Wandabschnitt aufweist oder daraus besteht, und wobei die Vertiefungen jeweils auf der dem als Rampe ausgebildeten ersten Wandabschnitt entgegen der Festziehumfangsrichtung gegenüberliegenden Umfangsseite von einem, bevorzugt an die Umformkante und/oder den ersten Wandabschnitt angrenzenden, zweiten Wandabschnitt des jeweiligen bzw. zugehörigen Umformabschnittes begrenzt sind.

Ferner betrifft die Erfindung eine ein derartiges Gewindeelement umfassende Verbindung gemäß Anspruch 10.

In der Praxis besteht das Problem, zuverlässig ein unbeabsichtigtes Lösen einer mit einem Innengewindebauteil verschraubten Kopfschraube zu verhindern. Um dies zu erreichen ist es bekannt, die Kopfschraube am Innengewindebauteil mittels spezieller Klebstoffe zusätzlich zu fixieren, die das Lösemoment erhöhen. Darüber hinaus ist es bekannt geworden, das Außengewinde einer Kopfschraube so zu verformen, dass hieraus durch Zusammenwirken mit dem dann als Norminnengewinde ausgebildeten Innengewinde eines Innengewindeelementes ein erhöhtes Lösemoment erzielt wird. Analog besteht ein entsprechendes Problem bei Muttern.

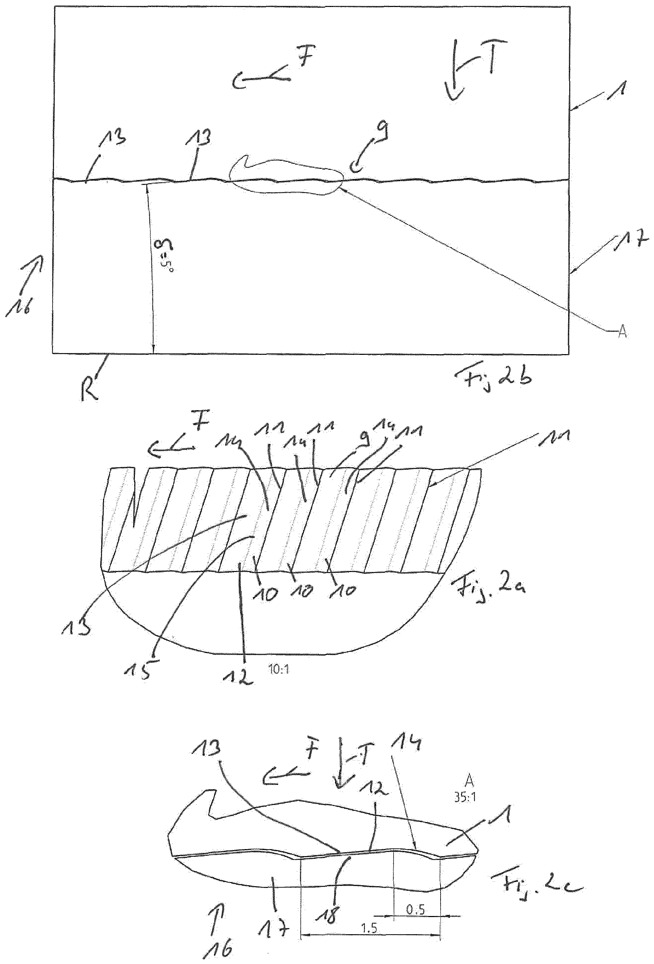

Aus der DE 20 2008 001 295 U1 ist eine Kopfschraube mit einem an einer Ringschulter ausgebildeten Rippenprofilierung bekannt. Die Rippen begrenzen zwischen den Rippen angeordnete axiale Vertiefungen. Wie sich aus Fig. 2 ergibt, die die Profilierung aus einer Blickrichtung von radial innen nach radial außen zeigt, ist zu erkennen, dass eine die Vertiefung in der Festziehumfangsrichtung begrenzende Flanke unter einem Winkel von 60° ansteigt, in eine von der Festziehumfangsrichtung wegweisende Richtung. Wird die bekannte Kopfschraube in eine Löserichtung bewegt, d.h. entgegen der Festziehumfangsrichtung verdreht, um eine mit der Schraube hergestellte Verbindung zu lösen, so wird die 60°-Flanke über etwaiges in die Vertiefung eingeformtes Baumaterial hinweggehoben - mit einem ausreichend hohen Brems- bzw. Haltemoment ist nicht zu rechnen.

Aus der US 2,147,209 A ist eine Mutter mit einer an deren Unterseite vorgesehenen, helikal verdrehten Rippenstruktur gezeigt, wobei die Flanken der Rippen steil ansteigen.

Aus der DE 85 30 936 A ist eine Kopfschraube bekannt, die an der Ringschulter ihres Schraubenkopfes eine Rippenstruktur mit zwischen den Rippen angeordneten Vertiefungen aufweist. Die entgegen der Festziehumfangsrichtung ansteigenden Flanken, die die Vertiefungen in der Festziehumfangsrichtung begrenzen, weisen einen Steigungswinkel von ungefähr 80° auf. Auch bei dieser Schraube würde bei einem Verdrehen derselben in Umfangsrichtung die vorgenannte Flanke über etwaiges eingeformtes Baumaterial herübergehoben bzw. vorbeigedreht - jedenfalls ist nicht mit einem maßgeblichen Halte- bzw. Bremsmoment zu rechnen.

Auch bei der aus der DE 28 22 928 A1 bekannten Kopfschraube steigt eine in der Festziehumfangsrichtung gelegene Flanke sehr steil, hier unter einem Winkel von näherungsweise 90° an, während der Umformabschnitt, d.h. die entgegen der Festziehumfangsrichtung gegenüberliegende Flanke sehr flach ansteigt.

Das Dokument US 8 807 896 B2 offenbart, bevorzugt als Kaltfließpressteil aus Metall ausgebildetes, eine Längsmittelachse aufweisendes Gewindeelement, mit einem Gewindesteigungswinkel aufweisenden Gewinde, wobei das Gewindeelement durch Verdrehen in einer Festziehungsumfangrichtung mit einem ein Gegengewinde aufweisenden Verschraubungspartner verschraubbar und dadurch in einer entlang der Längsmittelachse orientierten axialen Verstellrichtung auf einen Abstützabschnitt des Verscharaubungspartners oder eines davon separaten Bauteils verstellbar ist, und wobei das Gewindeelement einen Ringabschnitt zum Abstützen auf dem Abstützabschnitt aufweist, und wobei an dem Ringabschnitt Verankerungsmittel zum formschlüssigen Verankern in dem Abstützabschnitt zum Herstellen einer Formschlussverbindung ausgebildet sind, die mehrere in der Festziehumfangsrichtung beabstandete, bevorzugt gleichmäßig in Umfangsrichtung verteilt angeordnete, Abschnitte, jeweils umfassend eine sich in der axialen Verstellrichtung erstreckende, untere Kante aufweisen, wobei in der Festziehungsumfangrichtung vor den Abschnitten jeweils eine Vertiefung angeordnet ist, wobei die Vertiefung jeweils auf einer dem zugehörigen Abschnitt in der Festumziehungsumfangsrichtrung gegenüberliegenden Umfangsseite von einer W and begrenzt sind, die einen entgegen der Festziehungsumfangsrichtung nach oben entgegen der axialen Verstellrichtung ansteigenden, als Rampe ausgebildeten ersten Wandabschnitt aufweist oder daraus besteht und wobei die Vertiefungen jeweils auf der dem als Rampe ausgebildeten ersten Wandabschnitt entgegen der Festziehungsumfangrichtung gegenüberliegenden Umfangsseite von einem, bevorzugt an die Kante und/oder den ersten Wandabschnitt angrenzenden, zweiten Wandabschnitt des jeweiligen Abschnittes begrenzt sind, wobei die den Abschnitten in der Festziehungsumfangsrichtung gegenüberliegenden, jeweils als, insbesondere geradlinige, Rampe ausgebildeten ersten Wandabschnitte jeweils einen Steigungswinkel zu einer senkrecht von der Längsmittelachse durchsetzten Radialebene aufweisen, der um einen Winkel zwischen mindestens 5° und höchstens 20°, insbesondere zwischen mindestens 1° und höchstens 15°, vorzugsweise zwischen mindestens 1,5° und höchstens 10°, noch weiter bevorzugt zwischen mindestens 2° und höchstens 8° größer ist als der Gewindesteigungswinkel des Gewindes und wobei die zweiten Wandabschnitte einen Radius umfassen oder als Radius ausgebildet sind.

Ausgehend von dem vorgenannten Stand der Technik liegt der Erfindung die Aufgabe zugrunde, ein Gewindeelement anzugeben, welches ein unbeabsichtigtes Lösen des Gewindeelementes durch Bereitstellen eines hohen Halte- bzw. Bremsmomentes sicherstellt und bei dem keine Notwendigkeit besteht, ein Nicht-Norm-Gewinde und/oder ein deformiertes Gewinde vorzusehen und/oder die resultierende Verschraubungsverbindung mit speziellem Klebstoff gegen unbeabsichtigtes Lösen zu sichern. Ferner besteht die Aufgabe darin, eine mit einem solchen Gewindeelement hergestellte Verbindung anzugeben.

Diese Aufgabe wird hinsichtlich des Gewindeelementes mit den Merkmalen des Anspruchs 1 gelöst, d.h. bei einem gattungsgemäßen Gewindeelement, insbesondere einer Kopfschraube oder einer Mutter, dadurch, dass die den Umformabschnitten in der Festziehumfangsrichtung **(jeweils)** gegenüberliegenden, jeweils als, insbesondere geradlinige, Rampe ausgebildeten ersten Wandabschnitte, jeweils einen Steigungswinkel zu einer senkrecht von der Längsmittelachse durchsetzten (gedachten) Radialebene aufweisen, der zwischen mindestens 0,5° und höchstens 20°, vorzugsweise zwischen mindestens 1° und höchstens 15°, besonders bevorzugt zwischen mindestens 1,5° und höchstens 10°, noch weiter bevorzugt zwischen mindestens 2° und höchstens 8°, ganz besonders bevorzugt zwischen mindestens 2° und höchstens 5°, größer ist als der Gewindesteigungswinkel des Gewindes, und dass die zweiten Wandabschnitte (die entgegen der Festziehumfangsrichtung zu den jeweiligen ersten Wandabschnitten der jeweiligen Vertiefung, bevorzugt unmittelbar, benachbart sind) jeweils einen (sich in der Festziehumfangsrichtung und/oder axial in der translatorischen Verstellrichtung öffnenden) Radius umfassen oder als (ein solcher) Radius ausgebildet sind.

Hinsichtlich der Verbindung wird die Aufgabe mit den Merkmalen des Anspruchs 10 gelöst.

Vorteilhafte Weiterbildungen der Erfindung sind in den Unteransprüchen angegeben.

Der Erfindung liegt der Gedanke zugrunde, dass, bevorzugt (jedoch nicht zwingend) ein als Norm- bzw. Regelgewinde ausgebildetes Gewinde aufweisende Gewindeelement im Bereich eines axialen, sich um die Längsmittelachse herum erstreckenden Ringabschnitts, der im Falle der Ausbildung der Kopfschraube von einer (unteren) Ringschulter bzw. Stirnseite des Schraubenkopfes oder im Falle der Ausbildung des Gewindeelementes als Mutter von einer axialen Stirnseite eines Mutterkörpers gebildet ist, mit dem sich das Gewindeelement im montierten Zustand an einem Abstützabschnitt abstützt, mit Verankerungsmitteln zu versehen, die derart ausgebildet sind, dass mit diesen durch Verdrehen des Gewindeelementes in einer Festziehumfangsrichtung, d.h. bei einem Gewindeelement mit Rechtsgewinde im Uhrzeigersinn und des damit verbundenen axialen Vorschubs entlang der Längserstreckung der Längsmittelachse in der translatorischen (geradlinige) Verstellrichtung (axial auf dem Abstützabschnitt zu) Material (Abstützabschnittmaterial) des benachbart zu dem Gewinde angeordneten Abstützabschnitts, an dem sich das Gewindeelement mit dem vorerwähnten Ringabschnitt abstützt, plastisch in die dafür vorgesehenen, unterseitigen Vertiefungen in den Ringsabschnitt hineinverformt wird, um somit eine formschlüssige Verbindung zwischen dem Gewindeelement und dem entweder von einem Verschraubungspartner oder einem von dem Verschraubungspartner separaten, axial benachbart zum Ringabschnitt angeordneten Bauteil gebildeten Abstützabschnitt zu schaffen und damit ein zum Lösen des Gewindeelementes benötigtes Lösedrehmoment bzw. Losbrechmoment zu erhöhen, welches benötigt wird, um beim Lösen des Gewindeelementes das umgeformte Material erneut zu verformen oder abzuscheren. Anders ausgedrückt wird durch an dem Gewindeelement vorgesehene Verankerungsmittel eine das Lösedrehmoment bzw. ein Losbrechmoment erhöhende, in Löseumfangsrichtung wirksame Formschlussverbindung (axiales Ineinandergreifen) zwischen dem Gewindeelement bzw. der in dessen Ringabschnitt vorgesehenen Vertiefungen und einem Abstützabschnitt geschaffen, an dem sich das Gewindeelement (bei hergestellter Formschlussverbindung) über seinen Ringabschnitt in axialer Richtung abstützt, wobei hierzu die bevorzugt monolithisch mit dem Ringabschnitt ausgebildeten Verankerungsmittel eine Mehrzahl von in Umfangsrichtung beabstandeten und sich in axialer Richtung erstreckende Umformabschnitte aufweisen, die jeweils so beschaffen sind, dass mit diesen aufgrund der kombinierten Bewegung des Gewindeelementes beim Festziehen in der Festziehumfangsrichtung als auch in axialer Richtung (d.h. in die translatorische Verstellrichtung) Material des Abstützabschnittes in der Festziehumfangsrichtung umgeformt bzw. verdrängt wird, und zwar axial (entgegen der axialen translatorischen Verstellrichtung) in die jeweilige, zum jeweiligen Umformabschnitt in der Festziehumfangsrichtung benachbarte axiale Vertiefung hinein, sodass eine Verdrehbewegung des Gewindeelementes entgegen der Festziehumfangsrichtung, d.h. in eine Löseumfangsrichtung erschwert wird. Wesentlich ist, dass die Umformabschnitte zumindest einen Teil des Abstützabschnittsmaterials vom restlichen Abstützabschnitt bzw. -element beim Festziehen des Gewindeelementes nicht abtrennen bzw. spanen, sondern dass eine feste, materialschlüssige Verbindung zwischen dem in die Vertiefungen hineinverdrängten Material oder zumindest eines Teils des Materials und dem restlichen Abstützmaterial bestehen bleibt, um das notwendige Lösedrehmoment somit sicher zu erhöhen.

Das erhöhte Lösedrehmoment bzw. das Losbrechmoment resultiert daraus, dass das umgeformte (nicht abgelöste bzw. gespante) Abstützabschnittsmaterial bei Kraftbeaufschlagung des Gewindeelementes in der Löseumfangsrichtung zum Verdrehen des Gewindeelementes entgegen der Festziehumfangsrichtung gegen eine jeweilige, die jeweilige Vertiefung auf der dem jeweiligen Umformabschnitt in der Festziehumfangsrichtung gegenüberliegenden Umfangsseite begrenzenden Wand stößt bzw. sich daran abstützt. Um ein großes, definiertes Losbrechmoment vorzugeben und/oder ein Lösen des Gewindeelementes bzw. ein bewusstes Verdrehen desselben entgegen der Festziehumfangsrichtung unter Überwindung des Lösedrehmomentes bzw. Losbrechmomentes zu ermöglichen, ist erfindungsgemäß vorgesehen, dass die vorerwähnte, die die jeweilige Vertiefung in der Festziehumfangsrichtung gegenüberliegend dem zugehörigen Umformabschnitt begrenzende Wand (Flanke), zumindest ein, bevorzugt einen größten Flächenabschnitt dieser Wand bzw. Flanke bildender erster Wandabschnitt als, insbesondere gerade d.h. nicht gekrümmte, Rampe ausgebildet ist, und dabei nach axial oben (d.h. entgegen der axialen translatorischen Verstellrichtung beim Festziehen) von dem Abstützabschnitt weg in Richtung des oberen bzw. von dem Abstützabschnitt abgewandten Gewindeelementendes entgegen der Festziehumfangsrichtung (bevorzugt linear bzw. geradlinig) ansteigt, und zwar mit einer Steigung, die betragsmäßig größer ist als die Gewindesteigung des Gewindes des Gewindeelementes. Dabei ist es besonders bevorzugt, wenn der als Rampe ausgebildete und entgegen der Festziehumfangsrichtung axial von den Umformkanten der Umformabschnitte weg ansteigende, jeweilige erste Wandabschnitt den größten Flächenabschnitt der die Vertiefung in der Festziehumfangsrichtung begrenzenden Wand bzw. Flanke bildet, was bedeutet, dass der erste Wandabschnitt jeweils bevorzugt mindestens mehr als 50% der Fläche der jeweiligen gesamten Flanke bzw. Wand ausmacht, vorzugsweise mehr als 60%, noch weiter bevorzugt mehr als 70%, ganz besonders bevorzugt mehr als 80%, noch weiter bevorzugt mehr als 90%, wobei es besonders bevorzugt ist, wenn der jeweilige vorgenannte, als Rampe ausgebildete erste Wandabschnitt die jeweilige gesamte Wand bzw. Flanke ausmacht, die dem jeweiligen Umformabschnitt in der Festziehumfangsrichtung gegenüberliegt.

Ein ganz wesentliches Merkmal ist nun die vorerwähnte Wahl des Steigungswinkels der jeweiligen, vorgenannten Flanke bzw. Wand oder des jeweiligen, vorgenannten ersten Wandabschnittes dieser Flanke bzw. Wand, mit welchem diese bzw. dieser axial entgegen der Festziehumfangsrichtung, d.h. nach oben (d.h. entgegen der translatorischen Verstellrichtung) bzw. von den Umformkanten der Umformabschnitte axial weg ansteigt. Eine wesentliche Bedingung nach unten hin ist, dass der Steigungswinkel, den die jeweilige Flanke oder der jeweilige erste Wandabschnitt mit einer von der Längsmittelachse des Gewindeelementes senkrecht durchsetzten (gedachten) Radialebene einschließt größer ist, nämlich um mindestens 0,5° größer ist als der Gewindesteigungswinkel des Gewindes des Gewindeelementes, um somit ein leichtgängiges bzw. ungewolltes Lösen des Gewindeelementes sicher zu vermeiden. Auf der anderen Seite ist es zudem wesentlich, dass die Größe des vorgenannten Steigungswinkels bzw. der Flanken oder der ersten Wandabschnitte nicht größer gewählt wird als der Gewindesteigungswinkel zzgl. 20°. Anders ausgedrückt ist der Steigungswinkel des ersten Wandabschnittes oder der gesamten Wand (Flanke) zwischen mindestens 0,5° und maximal bzw. höchstens 20°, ganz besonders bevorzugt zwischen mindestens 1° und höchstens 15°, noch weiter bevorzugt zwischen mindestens 1,5° und höchstens 10°, noch weiter bevorzugt zwischen mindestens 2° und höchstens 8°, ganz besonders bevorzugt zwischen mindestens 2° und höchstens 5°, größer als der Gewindesteigungswinkel des Gewindes. Dadurch, dass der Steigungswinkel des jeweiligen ersten Wandabschnittes (oder der jeweiligen gesamten Flanke bzw. Wand) den vorgegebenen, jeweiligen Maximalsteigungswinkelwert nicht überschreitet, wird sichergestellt, das sich das umgeformte Abstützabschnittsmaterial großflächig an den ersten Wandabschnitt bzw. die Wand anlegen kann und verhindert wird, dass beim Lösen des Gewindeelementes, d.h. bei einem Verdrehen entgegen der Festziehumfangsrichtung sich die Verankerungsmittelstruktur, insbesondere Rippenstruktur im Wesentlichen nur mit einer unteren Kante an dem aufgeworfenen bzw. umgeformten Abstützabschnittmaterial abstützt oder im Rahmen des Lösens des Gewindeelementes über das aufgeworfene Abstützabschnittsmaterial innerhalb der Vertiefung hinweggehoben wird, ohne ein maßgebliches Halte- bzw. Lösemoment überwinden zu müssen. Auch wird vermieden, dass der jeweilige vorgenannte Wandabschnitt bzw. die jeweilige Flanke/Wand zunächst noch ein Stück weit in Umfangsrichtung verdreht werden muss, bis diese zur Anlage an dem Abstützabschnittsmaterial gelangen kann - d.h. es wird Spiel genommen aus einer mittels des erfindungsgemäßen Gewindeelementes hergestellten Verbindung, da sich durch die Winkelwahl das aufgeworfene bzw. umgeformte Abstützabschnittsmaterial sowohl an dem jeweiligen, vorgenannten ersten Wandabschnitt als auch an dem entgegen der Festziehumfangsrichtung gegenüberliegenden, wie später noch erläutert werden wird, als Radius ausgebildeten oder zumindest einen Radius umfassenden, jeweiligen zweiten Wandabschnitt des zugehörigen (jeweiligen) Umformabschnittes gleichzeitig abstützen kann. Für die Winkelwahl der Steigung der jeweiligen vorgenannten Flanke bzw. des jeweiligen, ersten vorgenannten Wandabschnitts bedeutet dies beispielhaft für den Fall eines typischen Gewindesteigungswinkels von 3,17°, dass der Steigungswinkel der jeweiligen Flanke und/oder des jeweiligen ersten Wandabschnittes nicht kleiner sein darf als 3,67° und nicht größer sein darf als 23,17°, bevorzugt nicht kleiner sein soll als 4,17° und nicht größer sein soll als 18,17°, vorzugsweise nicht kleiner sein soll als 4,67° und nicht größer sein soll als 13,17°, noch weiter bevorzugt nicht kleiner sein soll als 5,17° und nicht größer sein soll als 11,17°, noch weiter bevorzugt nicht kleiner sein soll als 5,17° und nicht größer sein soll als 8,17°.

Ein weiteres wesentliches Merkmal der Erfindung besteht darin, dass der jeweilige, dem jeweiligen ersten Wandabschnitt entgegen der Festziehumfangsrichtung gegenüberliegende und die Vertiefung begrenzende zweite Wandabschnitt des jeweiligen bzw. zugehörigen Umformabschnittes nicht geradlinig ausgebildet ist, sondern einen Radius umfasst und ganz besonderes bevorzugt als Radius ausgebildet ist, derart, dass ein konvexer Abschnitt der Vertiefung gebildet wird, in die hinein Abstützabschnittsmaterial verdrängbar ist. Der von dem Radius begrenzte Vertiefungsabschnitt ist aus Sicht der Vertiefung, jeweils konvex, wölbt also die Vertiefung entgegen der Festziehumfangsrichtung aus und öffnet sich somit aus Sicht des Radius in der Festziehumfangsrichtung und/oder in der translatorischen axialen Verstellrichtung. Noch anders ausgedrückt sind die zweiten Wandabschnitte radiusförmig, d.h. gewölbt bzw. gekrümmt, insbesondere kreissegmentförmig konturiert oder weisen zumindest über einen Teilabschnitt eine entsprechende Konturierung auf. Der Radius erstreckt sich dabei zwischen zwei in axialer Richtung beabstandeten Stellen der zweiten Wandabschnitte, insbesondere von der jeweils zugehörigen Umformkante bis zum benachbarten ersten Wandabschnitt bzw. der axial entgegen der Verstellrichtung tiefsten Stelle der zugehörigen Vertiefung. Die Radiuskontur der zweiten Wandabschnitte erstreckt sich bevorzugt, insbesondere geradlinig, in radialer Richtung über die gesamte Radialerstreckung der zugehörigen Vertiefung, sodass im Ergebnis eine hohlkehlenartige Vertiefungskontur auf der jeweiligen, entgegen der Festziehumfangsrichtung gelegenen Vertiefungsseite resultiert. Die Erfindung hat erkannt, dass durch die radiusförmige Ausgestaltung bzw. Konturierung der zweiten Wandabschnitte die Gefahr eines Abscherens von Abstützabschnittsmaterial beim Festziehen des Gewindeelementes durch Verdrehen in der Festziehumfangsrichtung deutlich minimiert wird und sich Abstützabschnittsmaterial besser bzw. in größerer Menge an den radiusförmigen zweiten Wandabschnitt anschmiegt, insbesondere in axialer Richtung weiter nach oben bzw. von dem Abstützabschnitt weg, ganz besonders bevorzugt bis in einen Übergang zwischen dem jeweiligen ersten und dem jeweiligen zweiten Wandabschnitt hinein.

Ein wie zuvor beschrieben ausgebildeten Gewindeelement gewährleistet nicht nur ein großes Halte- bzw. Lösemoment, verhindert ein Spiel in einer hergestellten Verbindung und verhindert ein Hinwegdrehen der in der Festziehumfangsrichtung gelegenen und entgegen der Festziehumfangsrichtung sowie axial entgegen der translatorischen Verstellrichtung ansteigenden ersten Wandabschnitte beim Lösen des Gewindeelementes über ein umgeformtes Abstützabschnittsmaterial, sondern lässt sich zudem erstmals besonders einfach in einem Kaltfließpressverfahren herstellen, was im Hinblick auf eine kostengünstige und präzise Fertigung des Gewindeelementes bevorzugt ist.

Grundsätzlich ist es möglich und bevorzugt, sämtliche Umformabschnitte mit zugehörigen Vertiefungen bzw. jeweiligem erstem und zweitem Wandabschnitt geometrisch identisch bzw. gleich auszuformen. Es ist jedoch auch denkbar, geometrisch unterschiedliche Umformabschnitte und/oder geometrisch unterschiedliche Vertiefungen bzw. geometrisch unterschiedliche erste und/oder zweite Wandabschnitte an einem Gewindeelement zu realisieren, wobei dann entweder sämtliche Umformabschnitte und Vertiefungen bzw. erste und zweite Wandabschnitte gemäß der Erfindung ausgestaltet sind oder lediglich ein Teil der Umformabschnitte bzw. Vertiefungen, genauer deren erste und zweite Wandabschnitte.

Auch ist es bevorzugt, wenn an jeden ersten Wandabschnitt in der Festziehumfangsrichtung eine Umformkante eines benachbarten Umformabschnittes angrenzt - auch hier ist eine alternative Ausführungsform realisierbar, bei der an mindestens einem der ersten Wandabschnitte nicht unmittelbar eine Umformkante eines benachbarten Umformabschnittes angrenzt, sondern dass diese in Umfangsrichtung beabstandet ist.

Im Hinblick auf die konkrete Ausgestaltung des Gewindeelementes gibt es unterschiedliche Möglichkeiten. Gemäß einer ersten Alternative ist vorgesehen, das Gewindeelement als Kopfschraube auszubilden, umfassend einem das Gewinde als Außengewinde aufweisenden, bzw. tragenden und sich entlang der Längsmittelachse erstreckenden Schaft sowie einen den Schaft in radialer Richtung überragenden, vorzugsweise einen, beispielsweise als Inbus- oder Torxsantrieb ausgebildeten, Antrieb zum Einbringen eines Drehmomentes in die Festziehumfangsrichtung aufweisenden Schraubenkopf, der an seiner dem Schaft zugewandten Unterseite eine den Ringabschnitt mit den Verankerungsmittel zum formschlüssigen Verankern in dem Abstützabschnitt ausbildende Ringschulter aufweist. Gemäß einer zweiten Alternative ist vorgesehen, das Gewindeelement als Mutter auszubilden, umfassend einen Mutterkörper mit einer Durchgangsöffnung an deren Innenumfang des Gewindes als Innengewinde ausgebildet ist und der stirnseitig den Ringabschnitt mit den Verankerungsmitteln aufweist, alternativ nur einseitig oder in beiden einander entgegengesetzten Axialrichtungen, wobei der Mutterkörper bevorzugt einen Antrieb, insbesondere in Form von Schlüsselflächenpaaren, zum Einbringen eines Drehmomentes in die Festziehumfangrichtung aufweist. Gemäß einer besonders bevorzugten Ausführungsform sind Mutter und/oder Kopfschraube (jeweils) einteilig, d.h. monolithisch ausgebildet.

In Weiterbildung der Erfindung ist mit Vorteil vorgesehen, dass eine Abstützfläche zum Abstützen des Ringabschnittes auf einem Abstützabschnitt vor dem Einformen der Umformabschnitte in den Abstützabschnitt ausschließlich von den unteren Umformkanten der Umformabschnitte gebildet ist, um somit eine maximale Flächenpressung bzw. Krafteinleitung zum Umformen von Abstützabschnittsmaterial zu gewährleisten.

Im Hinblick auf die Ausgestaltung bzw. die Dimensionierung der Umformabschnitte gibt es unterschiedliche Möglichkeiten. Gemäß einer ersten Alternative erstreckt sich eine jeweilige untere Umformkante der Umformabschnitte zumindest näherungsweise über die gesamte Ringabschnittsradialerstreckung. Gemäß einer alternativen Ausführungsform erstrecken sich die Umformkanten nur über einen Teilabschnitt bzw. Radialabschnitt der Radialerstreckung des Ringabschnittes. Letztere Variante dient insbesondere dazu, die Flächenpressung durch den axialen Vortrieb des Gewindeelements beim Einschrauben auf den Abstützabschnitt zu erhöhen und damit mit vergleichsweise geringem Kraftaufwand bzw. Drehmomentaufwand das Abstützabschnittsmaterial umformen zu können, um hierdurch die gewünschte Formschlussverbindung zu erzielen. Ganz besonders bevorzugt ist es, wenn zur Erhöhung der Flächenpressung sich die Umformkanten in radialer Richtung nur über 5% bis 75%, noch weiter bevorzugt zwischen 10% und 50%, ganz besonders bevorzugt zwischen 10% und 30%, noch weiter bevorzugt zwischen 10% und 25% der Radialerstreckung des Ringabschnitts in radialer Richtung über diese erstreckt. Bevorzugt entspricht die Radialerstreckung des Ringabschnitts im Falle der Realisierung des Gewindeelementes als Kopfschraube der Radialerstreckung der Ringschulter ausgehend radial innen vom Schaft bis zum Übergang in die Umfangsfläche bzw. Mantelfläche des Schraubenkopfes. Bevorzugt beträgt die Radialerstreckung des Ringabschnittes bei einer Realisierung des Gewindeelements als Schraube der Radialerstreckung einer ringförmigen axialen Stirnseite, insbesondere ausgehend vom Innenumfang der Durchgangsbohrung bis zum Übergang in die Umfangs- bzw. Mantelfläche des Mutterkörpers, insbesondere also bis zum Übergang zu fakultativen Schlüsselflächenpaaren der Mutter.

Zur Reduzierung der Radialerstreckung des Ringabschnittes und damit der Verankerungsmittel ist es möglich und bevorzugt einen entsprechenden Ringfortsatz an dem Gewindeelement, insbesondere an einer axialen Stirnseite einer Mutter bzw. an einer Ringschulter eines Schraubenkopfes einer Kopfschraube vorzusehen.

Im Hinblick auf die Anzahl der in Umfangsrichtung, insbesondere gleichmäßig verteilt angeordneten Umformabschnitte hat es sich als vorteilhafter Kompromiss zwischen einem hohen Halte- bzw. Bremsmoment einerseits und einem leichten Einformen andererseits herausgestellt, wenn ein (um die Längsmittelachse herum) gemessener Umfangswinkel zwischen jeweils zwei in Umfangsrichtung unmittelbar benachbarten Umformkanten aus einem Wertebereich zwischen 20° und 40°, insbesondere zwischen 25° und 35° gewählt ist und/oder ganz besonders bevorzugt 30° beträgt.

Ganz besonders bevorzugt sind die Umformabschnitte so ausgebildet, dass zumindest der größte Teil, d.h. mindestens 50% des nach dem Festziehen des Gewindeelementes in der jeweils zugehörigen Vertiefung befindliche Abstützabschnittsmaterial ausschließlich umgeformt, d.h. noch mit dem restlichen Abstützabschnittsmaterial außerhalb der Vertiefung materialschlüssig verbunden ist. Ganz besonders bevorzugt ist zumindest näherungsweise das gesamte innerhalb der Vertiefungen befindliche Abstützabschnittsmaterial noch mit dem außerhalb der Vertiefungen befindlichen Material des Abstützabschnitts verbunden, d.h. ausschließlich umgeformt und nicht von dem restlichen Abstützabschnitt bzw. Abstützabschnittsmaterial abgetrennt. Eine solche Ausführungsform lässt sich insbesondere realisieren durch die erfindungsgemäße radiusförmige Ausgestaltung des jeweiligen zweiten Wandabschnitts der Vertiefungen, wodurch die Vertiefungen entgegen der Festziehumfangsrichtung eine ausgewölbte Formgebung erhalte, die gewährleistet, dass in die jeweilige Vertiefung hinein umgeformtes Material sich an dem aus Sicht der Vertiefungen konkaven Radius des zweiten Wandabschnitts anformen bzw. in diesen Bereich hineingleiten kann.

Im Hinblick auf die Dimensionierung des, bevorzugt kreissegmentförmigen, Radius des zweiten Wandabschnittes hat es als vorteilhaft herausgestellt, wenn dieser so bemessen ist, dass er zwischen 15% und 60%, insbesondere zwischen 20% und 50%, ganz besonders bevorzugt zwischen 25% und 40%, noch weiter bevorzugt zwischen 28% und 35% des in Umfangsrichtung gemessenen Umfangsabstandes (Umfangserstreckung) zwischen zwei in Umfangsrichtung unmittelbar benachbarten Umformkanten und/oder der Umfangserstreckung der zugehörigen Vertiefung gewählt ist und/oder 33% des in Umfangsrichtung gemessene Umfangsabstandes (Umfangserstreckung) zwischen zwei in Umfangsrichtung unmittelbar benachbarten Umformkanten und/oder der Umfangserstreckung der zugehörigen Vertiefung beträgt.

Im Hinblick auf die Umfangserstreckung des zweiten Wandabschnittes, insbesondere des Radius, hat es sich als vorteilhaft herausgestellt, wenn diese aus einem Wertebereich zwischen 15% und 60%, insbesondere zwischen 20% und 50%, ganz besonders bevorzugt zwischen 25% und 40% noch weiter bevorzugt zwischen 28% und 35% des in Umfangsrichtung gemessenen Umfangabstandes (Umfangserstreckung) zwischen zwei in Umfangsrichtung unmittelbar benachbarten Umfangskanten und/oder der Umfangserstreckung der zugehörigen Vertiefung gewählt ist und/oder 33% des in Umfangsrichtung gemessenen Umfangsabstandes (Umfangserstreckung) zwischen zwei in Umfangsrichtung unmittelbar benachbarten Umformkanten und/oder der Umfangserstreckung der zugehörigen Vertiefung beträgt.

Besonders zweckmäßig ist es, wenn die Umformabschnitte, bevorzugt nach einem Kaltfließpressvorgang zum Formen des Gewindeelementes, gehärtet sind bzw. werden, um hierdurch optimal Abstützabschnittsmaterial eines mit den Umformabschnitten zusammenwirkenden Abstützabschnitts in die jeweils zugeordnete Vertiefung hinein deformieren bzw. umformen zu können. Besonders bevorzugt ist es dabei, wenn das Gewindeelement, ganz besonders bevorzugt ausschließlich im Bereich der Umformabschnitte, induktiv gehärtet ist, um hierdurch eine vergleichsweise dünne gehärtete Materialschicht zu erhalten und gleichzeitig eine gewisse Elastizität des nicht gehärteten Gewindeelementmaterials zu erhalten. Ganz besonders bevorzugt ist es, wenn das Gewindeelement, insbesondere die Umformkanten (nur) bis zu einer maximalen Materialtiefe aus einem Wertebereich zwischen 0,2 mm und 2,0 mm, bevorzugt zwischen 0,5 mm und 1,0 mm.

Die Erfindung führt auch auf eine als Formschlussverbindung ausgebildete Verbindung, umfassend ein wie zuvor beschrieben ausgebildetes Gewindeelement, insbesondere eine Kopfschraube oder eine Mutter, und einen Verschraubungspartner mit einem Gegengewinde zum Verschrauben mit dem Gewinde des Gewindeelements. Ferner umfasst die Verbindung einen Abstützabschnitt, der entweder von dem Verschraubungspartner oder einem von dem Verschraubungspartner und dem Gewindeelement separaten, axial zum Gewindeelement benachbarten Bauteil gebildet ist, auf dass das Gewindeelement durch Verschrauben mit dem Verschraubungspartner axial (d.h. in einer axialen translatorischen Verstellrichtung) zu verstellbar ist. Insbesondere ist ein derartiges Bauteil durch Verschrauben von Gewindeelement und Verschraubungspartner, bevorzugt zwischen Gewindeelement und Verschraubungspartner klemmbar. Gewindeelement und Abstützabschnitt greifen nach dem Fixiervorgang bzw. dem Verschrauben des Gewindeelements mit dem Verschraubungspartner axial ineinander, d.h. sind verzahnt und zwar durch Umformen von Abstützmaterialabschnitt axial entgegen der translatorischen Verstellrichtung in die Vertiefungen im Ringabschnitt des Gewindeelementes hinein. Bevorzugt weist der Abstützabschnitt vor der Herstellung der Formschlussverbindung eine ebene, dem Ringabschnitt des Gewindeelementes zugeordnete Oberfläche auf, in die sich das Gewindeelement, genauer dessen Umformabschnitte axial hineingraben. Die Formschlussverbindung zeichnet sich im Ergebnis dadurch aus, dass in die Vertiefungen in dem Ringabschnitt des Gewindeelementes (mittels der jeweils zugeordneten Umformabschnitte) Abstützabschnittmaterial hineinverformt ist, welches materialschlüssig mit den restlichen, d.h. nicht verformten Abstützabschnittmaterial verbunden ist. Bevorzugt ist der Großteil, noch weiter bevorzugt sämtliches in der Vertiefung befindliches Abstützabschnittsmaterial ausschließlich umgeformt (und nicht abgeschert). Das in die Vertiefungen hineinverformte Abstützabschnittsmaterial stützt sich an dem ersten, eine jeweilige Vertiefung in der Festziehumfangsrichtung begrenzenden, rampenförmigen, insbesondere geraden Wandabschnitt ab und bevorzugt auch an dem jeweiligen, entgegen der Festziehumfangsrichtung benachbarten zweiten Wandabschnittes eines jeweils zugeordneten Umformabschnittes, der sich durch eine vollständige zumindest abschnittsweise Radiusform auszeichnet, die besonders dazu beiträgt, ein Abscheren zu vermeiden, indem Abstützabschnittsmaterial entlang des Radius gleiten kann.

Bevorzugt ist das Gewindeelement aus einem härteren Material ausgebildet und/oder weist zumindest einen härteren, insbesondere durch Induktivhärten hergestellten Abschnitt auf, als dass mit diesem verwendete bzw. formschlüssig zu verbindende Abstützabschnitt. So besteht ganz besonders das Gewindeelement aus einem Stahl und der Abstützabschnitt aus einer Leichtmetalllegierung, insbesondere einer Aluminiumlegierung. Auch ist es möglich, das Gewindeelement zumindest im Bereich der Umformabschnitte, ganz besonders bevorzugt im Bereich der Umformkanten aus einem härteren Stahl auszubilden als ein Stahlmaterial des Abstützabschnitts, wobei die härtere Ausbildung der Umformabschnitte, insbesondere der Umformkanten durch nachträgliches Härten, insbesondere Induktionshärten erzeugbar ist.

Das erfindungsgemäße Gewindeelement ermöglicht durch die Wahl der die Vertiefungen jeweils in der Festziehumfangsrichtung begrenzenden ersten Wandabschnitte, insbesondere zumindest näherungsweise der gesamten Wandabschnitte relativ zu der Radialebene sowie durch die radiusförmige Ausgestaltung des jeweils entgegen der Festziehumfangsrichtung gegenüberliegenden zweiten Wandabschnittes, dass das umgeformte Abstützabschnittsmaterial sowohl an den axial von den Umformkanten weg, d.h. nach oben ansteigenden, jeweils als Rampe ausgebildeten ersten Wandabschnitten anliegt, insbesondere über den größten Teil der Flächenerstreckung dieser Wandabschnitte, ganz besonders bevorzugt über die gesamte Wand bzw. Flanke als auch an den entgegen der Festziehumfangsrichtung gegenüberliegenden, gekrümmten bzw. radiusförmigen zweiten Wandabschnitten, insbesondere derart, dass die Verbindung quasi kein Spiel in Umfangsrichtung aufweist.

Ganz besonderes bevorzugt ist die Formschlussverbindung durch eine entsprechende Ausgestaltung das Gewindeelement so realisiert, dass zum Lösen der Formschlussverbindung des Gewindeelementes entgegen der Festziehumfangsrichtung betätigbar ist, insbesondere durch Einbringen eines Drehmomentes in einen fakultativen Antrieb des Gewindeelementes und dabei ein Losbrechmoment überwindbar ist, das größer ist als ein notwendiges Löseelementes zum Lösen einer entsprechenden Verbindung mit gleichdimensioniertem Gewindeelement, welches nicht die erfindungsgemäßen Umformabschnitte und Vertiefungen mit der Winkelwahl der ersten Wandabschnitte und den radiusförmigen und/oder einen Radius aufweisenden zweiten Wandabschnitte, sondern stattdessen beispielsweise einen ebenen, insbesondere radial ebenen, Ringabschnitt zur Anlage an dem Abstützabschnitt aufweist.

Besonders bevorzugt ist es, wenn die Formschlussverbindung derart ausgebildet ist, dass zum Lösen der Formschlussverbindung das Gewindeelement entgegen der Festziehumfangsrichtung betätigbar, und dabei das in die Vertiefungen eingeformte Abstützabschnittsmaterial abscherbar ist. Anders ausgedrückt ist das Gewindeelement bevorzugt so gestaltet, dass beim Festziehen das ausschließlich umgeformte Abstützabschnittsmaterial beim Lösen zwangsweise abgeschert wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis Fig. 1c: unterschiedliche teilweise geschnittene Darstellung einer bevorzugten Ausführungsform eines nach dem Konzept der Erfindung ausgebildeten, vorliegend als Mutter realisierten Gewindeelementes,
- Fig. 2a: eine Abwicklung eines Verankerungsmittel aufweisenden Ringabschnittes eines nach dem Konzept der Erfindung ausgebildeten Gewindeelementes,
- Fig. 2b und Fig. 2c: Abwicklungen einer mittels eines erfindungsgemäßen Gewindeelementes hergestellten, formschlüssigen Verbindung,
- Fig. 3a bis Fig. 3c: eine Alternative, nach dem Konzept der Erfindung ausgebildete Ausführung eines als Mutter realisierten Gewindeelementes mit verglichen zu dem Ausführungsbeispiel gemäß den Fig. 1a bis 1c in radialer Richtung schmalerem Ringabschnitt,
- Fig. 4a bis Fig. 4c: ein weiteres alternatives Ausführungsbeispiel eines nach dem Konzept der Erfindung ausgebildeten Gewindeelementes in Form einer Mutter,
- Fig. 5a bis Fig. 5c: ein weiteres alternatives Ausführungsbeispiel eines nach dem Konzept der Erfindung ausgebildeten Gewindeelementes, wieder beispielhaft in Form einer Mutter verglichen mit dem Ausführungsbeispiel gemäß den Fig. 1a bis 1c mehr Umformabschnitten und Kanten,
- Fig. 6: eine perspektivische Darstellung eines alternativen, nach dem Konzept der Erfindung ausgebildeten, vorliegend als Kopfschraube realisierten Gewindeelementes.

In den Figuren sind gleiche Elemente und Elemente mit der gleichen Funktion mit den gleichen Bezugszeichen gekennzeichnet. Die in den Figuren angegebenen Abmessungen dienen lediglich Erläuterungszwecken und beschränken die Erfindung nicht - jedoch sollen die Abmessungen und beliebige sich aus mindestens zwei Abmessungen ergebende Abmessungsverhältnisse als erfindungswesentlich offenbart gelten und beanspruchbar sein.

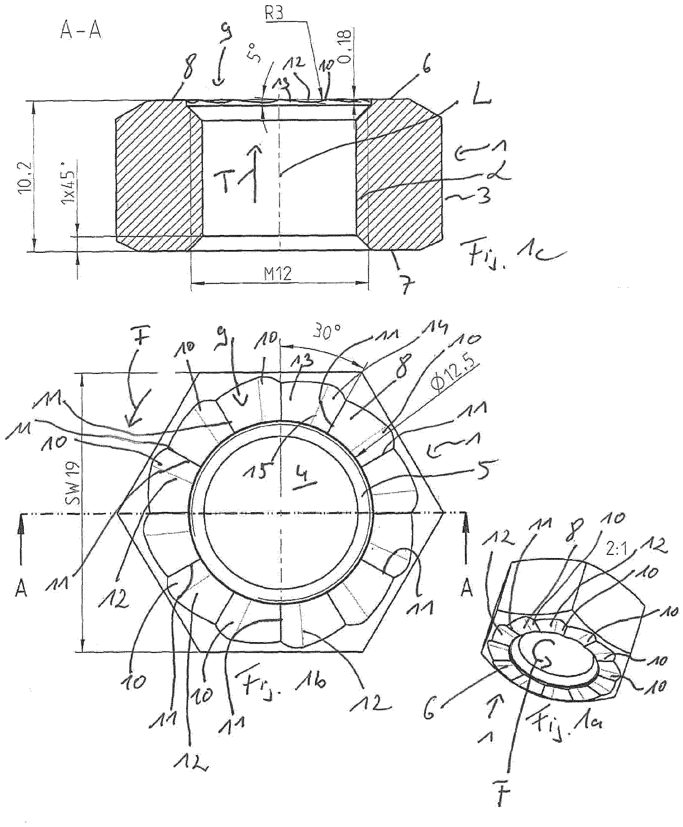

In den Fig. 1a bis 1c ist ein als Kaltfließpressteil aus Metall, vorliegend Stahl ausgebildetes Gewindeelement 1, beispielhaft in Form einer Mutter gezeigt. Diese umfasst einen monolithischen Mutterkörper, der mantelseitig einen Antrieb 3, vorliegend in Form von Schlüsselflächenpaaren, hier beispielhaft mit einer Schlüsselweite SW19 aufweist. Im Mutterkörper 2 ist eine Durchgangsöffnung 4 vorgesehen, die außen begrenzt wird von einem als Innengewinde ausgebildeten Gewinde 5, vorliegend beispielhaft einen metrischen M12-Gewinde.

Der Mutterkörper 2 weist eine Längsmittelachse L auf, entlang derer axial zwei axiale Stirnseiten 6, 7 voneinander beabstandet sind. Die beispielhaft in der Zeichnungsebene gemäß Fig. 1c obere Stirnseite 6 bilden einen Ringabschnitt 8 aus, an welchem Verankerungsmittel 9 monolithisch mit dem Mutterkörper 2 realisiert sind. Durch Verdrehen des Gewindeelementes 1 in einer Festziehumfangsrichtung F um die Längsmittelachse L und dadurch Verschrauben des Gewindeelementes 1 mit einem ein zum Gewinde 5 korrespondierenden Gegengewinde aufweisenden Verschraubungspartner wird das Gewindeelement 1 axial bzw. in einer translatorischen, axialen Verstellrichtung T bewegt, im Beispiel von Fig. 1b senkrecht aus der Zeichnungsebene heraus bzw. bei der Darstellung gemäß Fig. 1c in der Zeichnungsebene nach oben. Durch die kombinierte Verdreh- und axiale Verstellbewegung formen sich die Verankerungsmittel 9 in einen Abstützabschnitt ein, sodass eine formschlüssige Verbindung zwischen dem Gewindeelement 1 und dem Abstützabschnitt hergestellt wird.

Die Verankerungsmittel 9 umfassen in dem gezeigten Ausführungsbeispiel zur Herstellung einer formschlüssigen Verbindung bzw. Verankerung im Abstützabschnitt mehrere, hier beispielhaft gleichmäßig in Umfangsrichtung beabstandete Umformabschnitte 10, jeweils aufweisend eine axial untere bzw. in der axialen Verstellrichtung T gelegene und sich in radialer Richtung erstreckende Umformkante 11.

In der Festziehumfangsrichtung benachbart zu jedem Umformabschnitt 10 befindet sich eine axiale Vertiefung 12, die nach oben erstreckt bzw. von den Verankerungsmitteln 9 weg, d.h. entgegen der axialen Verstellrichtung T erstreckt und in die beim Verdrehen des Gewindeelementes 1 in der Festziehumfangsrichtung F mittels des jeweils zugehörigen Umformabschnittes 10 Abstützabschnittsmaterial einformbar bzw. hineinverdrängbar ist, um somit ein Lösen des Gewindeelementes 1 entgegen der Festziehumfangsrichtung F zu erschweren.

In der Festziehumfangsrichtung F wird jede Vertiefung 12 von einem rampenförmigen ersten Wandabschnitt 13 begrenzt, der entgegen der Festziehumfangsrichtung axial von den Umformkanten bzw. dem Abstützabschnitt weg ansteigt. Entgegen der Festziehumfangsrichtung wird jede Vertiefung 12 begrenzt von einem zweiten, radiusförmigen Wandabschnitt 14, wobei sich erster und zweiter Wandabschnitt 13, 14 jeweils an einer Radiallinie 15 bzw. in axialer Richtung tiefsten Stelle der jeweiligen Vertiefung treffen. In dem gezeigten Ausführungsbeispiel sind die zweiten Wandabschnitte 14 mit einem Radius R3 realisiert.

Wie sich aus Fig. 1b ergibt sind jeweils zwei unmittelbar in Umfangsrichtung benachbarte Umformkanten 11 um einen Umfangswinkel von 30° zueinander beabstandet - anders ausgedrückt beträgt der Umfangserstreckungswinkel der Vertiefungen 12 30°.

Aus den Fig. 1a bis 1c ergibt sich zudem, dass eine axial am weitesten vorstehende Fläche, sprich eine Abstützfläche zum Abstützen des Ringabschnittes 6 auf dem Abstützabschnitt vor dem Einformen der Umformabschnitte 10 in den Abstützabschnitt ausschließlich von den unteren Umformkanten der Umformabschnitte 10 gebildet ist.

In Fig. 2a ist eine Abwicklung von erfindungsgemäßen Verankerungsmitteln 9 gezeigt. Zu erkennen sind die in Umfangsrichtung beabstandeten Umformkanten 11, die die zugehörigen Umformabschnitte 10 in der axialen Verstellrichtung T, d.h. hin zum Abstützabschnitt begrenzen. Zu erkennen sind ebenfalls die zweiten Wandabschnitte 14 der Umformabschnitte 10 in Radiusform, wobei durch den Radius die jeweils zwischen zwei Umformkanten 11 ausgebildeten Vertiefungen 12 konvex entgegen der Festziehumfangsrichtung F erweitert bzw. ausgewölbt werden. Die zweiten Wandabschnitten 14 sind in den gezeigten Ausführungsbeispiel vollständig radiusförmig ausgestaltet, sodass sich der Radius jeweils erstreckt von einer jeweiligen Umformkante 11 bis zum jeweiligen axial tiefsten Punkt bzw. jeder Vertiefung 12 bzw. bis zur jeweiligen Radiallinie 15. Hier trifft auf den jeweiligen zweiten Wandabschnitt 14 der in der Festziehrichtung F gegenüberliegende erste Wandabschnitt 13, der eine um mindestens 0,5° und höchstens 20° größeren Steigungswinkel δ aufweist als der Gewindesteigungswinkel des Gewindes 5. Diese Winkelsituation ergibt sich aus den Fig. 2b und 2c, die jeweils Ausschnitte einer Verbindung 16 aus dem Gewindeelement 1 und einem Abstützabschnitt 17 zeigen, in den die Verankerungsmittel 9 des Gewindeelementes 1 axial eingeformt sind. In Fig. 2b ist der Steigungswinkel δ eines ersten Wandabschnittes 13 bzw. der ersten Wandabschnitte 13 eingezeichnet. Dieser Winkel δ wird aufgespannt von dem jeweiligen ersten Wandabschnitt 13 und einer Radialebene R. Der Gewindesteigungswinkel eines hier beispielhaft vorgesehenen M12-Gewindes beträgt 2,94°, sodass der Steigungswinkel δ mit einem Wert von hier 5° um einen Winkel von 2,06° größer ist als der Gewindesteigungswinkel α des Gewindes 5.

Aus der vergrößerten Darstellung gemäß Fig. 2c ist die Radiusform der zweiten Wandabschnitte 14 ersichtlich, ebenso wie die jeweilige Umfangserstreckung der Vertiefungen 12. In dem gezeigten Ausführungsbeispiel entspricht die Umfangserstreckung des jeweiligen zweiten Wandabschnittes 14 50% der Umfangserstreckung des zugehörigen ersten Wandabschnittes 13 bzw. ein Drittel der Umfangserstreckung der Vertiefung 12.

Zu erkennen ist, dass bei hergestellter Formschlussverbindung sich Abstützabschnittsmaterial 18 an den ersten Wandabschnitt 13 anschmiegt, ebenso wie an den zweiten Wandabschnitt 14 - die aufgrund des Radius gekrümmte bzw. bogenförmige Formgebung des zweiten Wandabschnitts 14 spiegelt sich formkongruent im umgeformten Abstützabschnittsmaterial 18 wieder, welches materialschlüssig mit dem restlichen Material des Abstützabschnitts 17 verbunden ist bzw. bleibt.

Wie sich aus der Darstellung gemäß Fig. 2c ergibt, ist das Gewindeelement 1 beim Verdrehen entgegen der Festziehumfangsrichtung F mit seinen ersten Wandabschnitten 13 an großflächig daran anliegendem Abstützabschnittsmaterial 18 an, woraus eine erhebliche Erhöhung des Lösemomentes resultiert - ein darüber Hinwegdrehen ist nicht ohne Weiteres möglich, da, wie erwähnt, der Steigungswinkel des Gewindes kleiner ist.

Im Folgenden werden alternative Ausführungsbeispiele von erfindungsgemäß ausgebildeten Gewindeelementen 1 beschrieben, wobei zur Vermeidung von Wiederholungen im Wesentlichen nur auf die Unterschiede zu den vorhergehenden Ausführungsbeispielen eingegangen wird. Im Hinblick auf die Gemeinsamkeiten sowie die sich mit einem solchen Gewindeelement herstellbaren Verbindungen wird auf die vorstehende Figurenbeschreibung mit zugehörigen Figuren verwiesen.

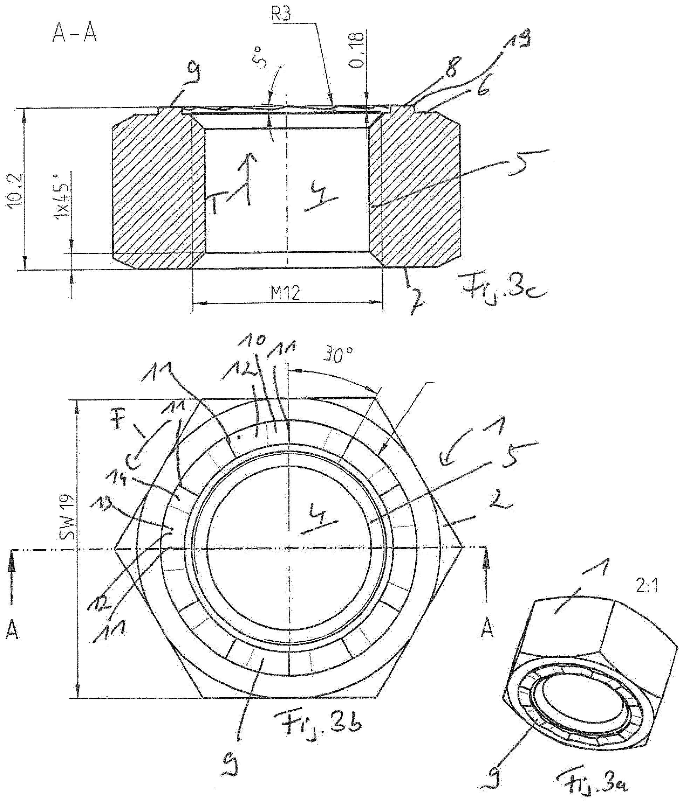

Bei dem Ausführungsbeispiel gemäß Fig. 3a bis 3c ist zu erkennen, dass der Ringabschnitt 8 eine geringere Radialerstreckung aufweist, wodurch die Flächenpressung beim Einformen der Verankerungsmitteln 9 erhöht wird. Hierzu ist auf der Stirnseite 6 ein den Ringabschnitt 8 ausbildender Ringfortsatz 19 (Stufe) vorgesehen.

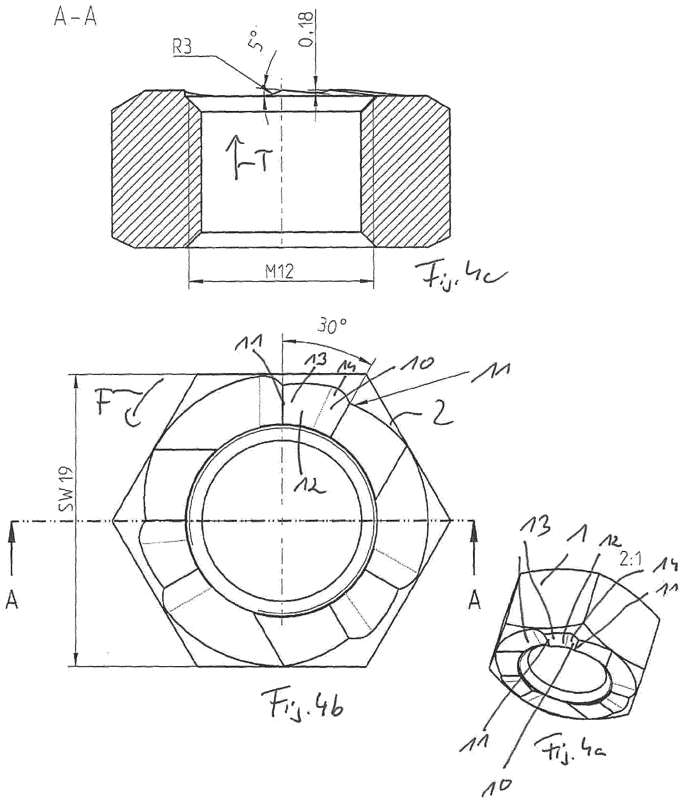

Bei dem Ausführungsbeispiel gemäß Fig. 4a sind deutlich weniger Umformabschnitte 10, (nämlich drei an der Zahl) mit zugehöriger Umformkante 11 vorgesehen, um das Festziehdrehmoment zu reduzieren.

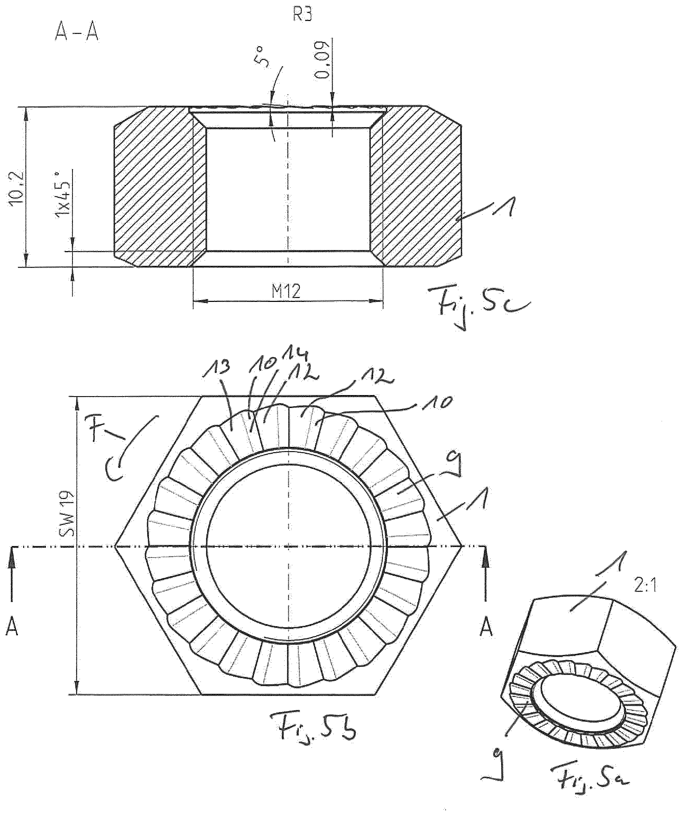

Bei dem Ausführungsbeispiel gemäß den Fig. 5a bis 5c ist die Umfangserstreckung der Vertiefungen 12 geringer als bei dem Ausführungsbeispiel gemäß den Fig. 1a bis 1c, wodurch mehr Umformabschnitte 10 auf der gleichen Fläche angeordnet sind.

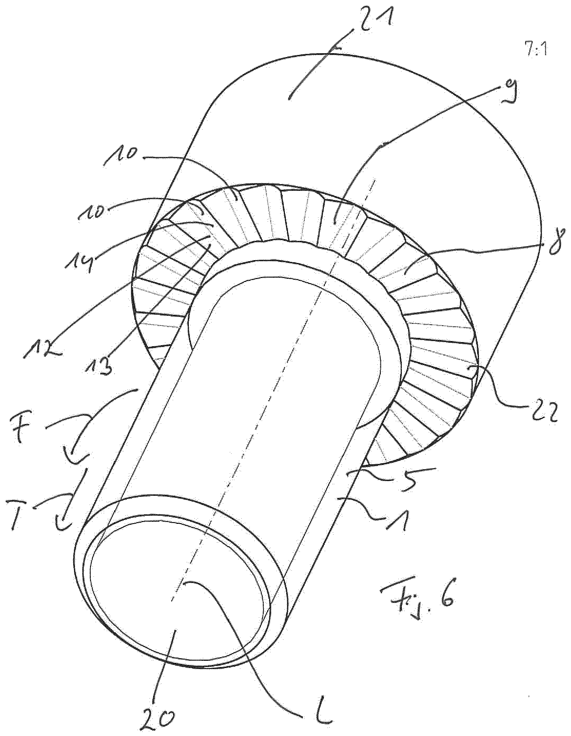

Das Ausführungsbeispiel gemäß Fig. 6 zeigt ein als Kopfschraube ausgebildetes Gewindeelement mit einem sich entlang der Längsmittelachse L erstreckenden Schaft 20, welcher ein als Außengewinde ausgebildetes Gewinde 5 trägt. Radial überragt wird der Schaft 20 samt Gewinde 5 von einem Schraubenkopf 21 der eine untere bzw. dem Schaft 20 zugewandte Ringschulter 22 aufweist, die vorliegend über ihre gesamte Radialerstreckung (alternativ nur über einen Teilabschnitt ihrer Radialerstreckung) den Ringabschnitt 8 mit seinen Verankerungsmitteln 9 ausbildet. Die Verankerungsmittel 9 sind in dem gezeigten Ausführungsbeispiel analog zu dem Ausführungsbeispiel gemäß den Fig. 5a bis 5c ausgebildet und umfassen eine Vielzahl von den Umfangsrichtungen, hier beispielhaft gleichmäßig verteilt angeordneten Umformabschnitten 10 jeweils tragend einen radiusförmigen zweiten Wandabschnitt 14, der eine jeweils zugehörige Vertiefung 12 entgegen der Festziehumfangsrichtung begrenzt. In der Festziehumfangsrichtung F wird jede Vertiefung 12 begrenzt von einem ersten, rampenförmigen Wandabschnitt 13, aufweisend einen um mindestens 0,5° größeren Steigungswinkel als der Gewindesteigungswinkel des als Außengewinde ausgebildeten Gewindes 5.

Stirnseitig, in der Ansicht gemäß Fig. 6 nicht sichtbar trägt die Kopfschraube in ihrem Schraubenkopf 21 eine stirnseitige Antriebsvertiefung.

### Bezugszeichenliste

- 1: Gewindeelement
- 2: Mutterkörper
- 3: Antrieb
- 4: Durchgangsöffnung
- 5: Gewinde
- 6: Stirnseite mit Ringabschnitt
- 7: Stirnseite
- 8: Ringabschnitt
- 9: Verankerungsmittel
- 10: Umformabschnitt
- 11: Umformkanten
- 12: Vertiefung
- 13: erste Wandabschnitte
- 14: zweite Wandabschnitte
- 15: Radiallinie
- 16: Verbindung
- 17: Abstützabschnitt
- 18: Abstützabschnittsmaterial
- 19: Ringfortsatz
- 20: Schaft
- 21: Schraubenkopf
- 22: Ringschulter

- L: Längsmittelachse
- T: axiale (translatorische) Verstellrichtung des Gewindeelementes durch Verdrehen in Festziehumfangsrichtung
- F: Festziehumfangsrichtung
- R: Radialebene
- δ: Steigungswinkel der ersten Wandabschnitte

## Patentansprüche

1. Bevorzugt als Kaltfließpressteil aus Metall ausgebildetes, eine Längsmittelachse (L) aufweisendes Gewindeelement (1), mit einem einen Gewindesteigungswinkel aufweisenden Gewinde (5), wobei das Gewindeelement (1) durch Verdrehen in einer Festziehumfangsrichtung (F) mit einem ein Gegengewinde aufweisenden Verschraubungspartner verschraubbar und dadurch in einer entlang der Längsmittelachse (L) orientierten axialen Verstellrichtung (T) auf einen Abstützabschnitt (17), des Verschraubungspartners oder eines davon separaten Bauteils, verstellbar ist, und wobei das Gewindeelement (1) einen Ringabschnitt (8) zum Abstützen auf dem Abstützabschnitt (17) aufweist, und wobei an dem Ringabschnitt (8) Verankerungsmittel (9) zum formschlüssigen Verankern in dem Abstützabschnitt (17) zum Herstellen einer Formschlussverbindung ausgebildet sind, die mehrere in der Festziehumfangsrichtung (F) beabstandete, bevorzugt gleichmäßig in Umfangsrichtung verteilt angeordnete, Abschnitte (10), jeweils umfassend eine sich in der axialen Verstellrichtung (T) erstreckende, untere Umformkante (11) aufweisen, wobei in der Festziehumfangsrichtung (F) vor den Abschnitten (10) jeweils eine Vertiefung (12) angeordnet ist, wobei die Vertiefungen (12) jeweils auf einer dem zugehörigen Abschnitt (10) in der Festziehumfangsrichtung (F) gegenüberliegenden Umfangsseite von einer Wand begrenzt sind, die einen entgegen der Festziehumfangsrichtung (F) nach oben entgegen der axialen Verstellrichtung (T) ansteigenden, als Rampe ausgebildeten ersten Wandabschnitt (13) aufweist oder daraus besteht und wobei die Vertiefungen (12) jeweils auf der dem als Rampe ausgebildeten ersten Wandabschnitt (13) entgegen der Festziehumfangsrichtung (F) gegenüberliegenden Umfangsseite von einem, bevorzugt an die Kante (11) und/oder den ersten Wandabschnitt (13) angrenzenden, zweiten Wandabschnitt (14) des jeweiligen Abschnittes (10) begrenzt sind, wobei die den Abschnitten (10) in der Festziehumfangsrichtung (F) gegenüberliegenden, jeweils als, insbesondere geradlinige, Rampe ausgebildeten ersten Wandabschnitte (13) jeweils einen Steigungswinkel (δ) zu einer senkrecht von der Längsmittelachse (L) durchsetzten Radialebene (R) aufweisen, der um einen Winkel zwischen mindestens 0,5° und höchstens 20°, insbesondere zwischen mindestens 1° und höchstens 15°, vorzugsweise zwischen mindestens 1,5° und höchstens 10°, noch weiter bevorzugt zwischen mindestens 2° und höchstens 8°, ganz besonders bevorzugt von mindestens 2° und höchstens 5°, größer ist als der Gewindesteigungswinkel des Gewindes (5), und wobei die zweiten Wandabschnitte (14) einen Radius umfassen oder als Radius ausgebildet sind, **dadurch gekennzeichnet, dass** die Abschnitte Umformabschnitte sind, dass die Kante eine Umformkante ist und dass die Vertiefung zur Aufnahme von mittels des jeweiligen Umformabschnittes umgeformten Abstützabschnittsmaterials angeordnet ist.

2. Gewindeelement nach Anspruch 1,
**dadurch gekennzeichnet,**
**dass** dieses als Kopfschraube ausgebildet ist, umfassend einen das Gewinde (5) als Außengewinde aufweisenden, sich entlang der Längsmittelachse (L) der Kopfschraube erstreckenden Schaft (20) und einem den Schaft (20) in radialer Richtung überragenden, vorzugsweise einen Antrieb (3) zum Einbringen eines Drehmomentes in die Festziehumfangsrichtung (F) aufweisenden, Schraubenkopf (21), der an seiner dem Schaft (20) zugewandten Unterseite eine den Ringabschnitt (8) mit den Verankerungsmittel (9) zum formschlüssigen Verankern in dem Abstützabschnitt (17) ausbildende Ringschulter (22) aufweist, oder dass das Gewindeelement (1) als Mutter ausgebildet ist, umfassend einen Mutterkörper (2) mit einer Durchgangsöffnung (4), an deren Innenumfang das Gewinde (5) als Innengewinde ausgebildet ist und der stirnseitig den Ringabschnitt (8) mit den Verankerungsmitteln (9) aufweist, wobei der Mutterkörper (2) bevorzugt einen Antrieb (3), insbesondere in Form von Schlüsselflächenpaaren, zum Einbringen eines Drehmomentes in die Festziehumfangsrichtung (F) aufweist.

3. Gewindeelement nach einem der Ansprüche 1 oder 2,
**dadurch gekennzeichnet,**
**dass** eine Abstützfläche zum Abstützen des Ringabschnittes (8) auf einem Abstützabschnitt (17) vor dem Einformen der Umformabschnitte (10) in den Abstützabschnitt (17) ausschließlich von den unteren Umformkanten (11) der Umformabschnitte (10) gebildet ist.

4. Gewindeelement nach einem der vorhergehenden Ansprüche,
**dadurch gekennzeichnet,**
**dass** sich die unteren Umformkanten (11) in radialer Richtung über die gesamte Ringabschnittsradialerstreckung erstrecken oder bevorzugt nur über einen Teilabschnitt der Radialerstreckung des Ringabschnitts (8), insbesondere aus einem Wertebereich zwischen 5% und 75%, bevorzugt zwischen 5% und 50%, besonders bevorzugt zwischen 5% und 30%, noch weiter bevorzugt zwischen 5% und 25 %, ganz besonders bevorzugt zwischen 5% und 15%.

5. Gewindeelement nach einem der vorhergehenden Ansprüche,
**dadurch gekennzeichnet,**
**dass** ein Umfangswinkel zwischen jeweils zwei in Umfangsrichtung unmittelbar benachbarten Umformkanten (11) aus einem Wertebereich zwischen 20° und 40°, insbesondere zwischen 25° und 35°, gewählt ist und besonders bevorzugt 30° beträgt.

6. Gewindeelement nach einem der vorhergehenden Ansprüche,
**dadurch gekennzeichnet,**
**dass** die Umformabschnitte (10) zumindest größtenteils, bevorzugt ausschließlich, Abstützabschnittsmaterial (18) umformend, nicht spanend ausgebildet sind.

7. Gewindeelement nach einem der vorhergehenden Ansprüche,
**dadurch gekennzeichnet,**
**dass** der Radius des zweiten Wandabschnitts (14) aus einem Wertebereich zwischen 15% und 60%, insbesondere zwischen 20% und 50%, ganz besonders bevorzugt zwischen 25% und 40%, noch weiter bevorzugt zwischen 28% und 35% des in Umfangsrichtung gemessenen Umfangsabstandes zwischen zwei in Umfangsrichtung unmittelbar benachbarten Umformkanten (11) und/oder der Umfangserstreckung der jeweils zugehörigen Vertiefung (12) gewählt ist und/oder 33% in Umfangsrichtung gemessenen Umfangsabstandes zwischen zwei in Umfangsrichtung unmittelbar benachbarten Umformkanten (11) und/oder der Umfangserstreckung der jeweils zugehörigen Vertiefung (12) beträgt.

8. Gewindeelement nach einem der vorhergehenden Ansprüche,
**dadurch gekennzeichnet,**
**dass** eine Umfangserstreckung des zweiten Wandabschnitts (14) aus einem Wertebereich zwischen 15% und 60%, insbesondere zwischen 20% und 50%, ganz besonders bevorzugt zwischen 25% und 40%, noch weiter bevorzugt zwischen 28% und 35% des in Umfangsrichtung gemessenen Abstandes zwischen zwei in Umfangsrichtung unmittelbar benachbarten Umformkanten (11) und/oder der Umfangserstreckung der jeweils zugehörigen Vertiefung (12) gewählt ist und/oder 33% des in Umfangsrichtung gemessenen Umfangsabstandes zwischen zwei in Umfangsrichtung unmittelbar benachbarten Umformkanten (11) und/oder der Umfangserstreckung der jeweils zugehörigen Vertiefung (12) beträgt.

9. Gewindeelement nach einem der vorhergehenden Ansprüche,
**dadurch gekennzeichnet,**
**dass** das Gewindeelement (1), bevorzugt ausschließlich partiell, gehärtet ist, insbesondere derart, dass, insbesondere die Umformkanten (11), bevorzugt induktiv, gehärtet sind und/oder das Gewindeelement (1), insbesondere die Umformkanten (11) bis zu einer maximalen Materialtiefe von aus einem Wertebereich zwischen 0,2 mm und 2,0 mm, bevorzugt zwischen 0,5 mm und 1,0 mm gehärtet sind.

10. Verbindung, umfassend eine Gewindeelement (1) nach einem der vorhergehenden Ansprüche sowie einen Verschraubungspartner, wobei das Gewinde (5) des Gewindeelementes (1) mit einem Gegengewinde des Verschraubungspartners verschraubt ist und in die Vertiefungen (12) Material des Abstützabschnittes (17) des Verschraubungspartners oder eines axial zwischen Verschraubungspartner und Gewindeelement (1) geklemmten Bauteils zur Herstellung einer Formschlussverbindung eingeformt ist, wobei das umgeformte Material materialschlüssig mit dem nicht umgeformten Material des Abstützabschnitts (17) verbunden ist.

11. Verbindung nach Anspruch 10,
**dadurch gekennzeichnet,**
**dass** die Umformabschnitte (10) des Gewindeelementes (1) aus einem härteren Material ausgebildet ist sind als das in die mindestens eine Vertiefung (12) eingeformte, umgeformte Material des Abstützabschnittes (17).

12. Verbindung nach einem der Ansprüche 10 oder 11,
**dadurch gekennzeichnet,**
**dass** das umgeformte Material sowohl an dem jeweiligen als Rampe ausgebildeten Wandabschnitt (13, 14) anliegt, insbesondere über den größten Teil der Flächenerstreckung dieses Wandabschnittes (13, 14), als auch an dem Radius des zugehörigen zweiten Wandabschnitts (14) der jeweiligen Vertiefung (12).

13. Verbindung nach einem der Ansprüche 10 bis 12,
**dadurch gekennzeichnet,**
**dass** die Formschlussverbindung derart ausgebildet ist, dass zum Lösen der Formschlussverbindung das Gewindeelement (1) entgegen der Festziehumfangsrichtung (F) betätigbar und dabei ein Losbrechmoment überwindbar ist, das größer ist als ein Lösemoment einer entsprechenden Verbindung (16), bei der ein ansonsten identisches Gewindeelement (1) keine Umformabschnitte (10) aufweist.

14. Verbindung nach einem der Ansprüche 10 bis 13,
**dadurch gekennzeichnet,**
**dass** die Formschlussverbindung derart ausgebildet ist, dass zum Lösen der Formschlussverbindung das Gewindeelement (1) entgegen der Festziehumfangsrichtung (F) verdrehbar und dabei das in die Vertiefung (12) eingeformte Bauteilmaterial abscherbar ist.

## Claims

1. A threaded element (1), preferably realized as a cold extrusion part made of metal, having a longitudinal center axis (L) and comprising a thread (5) having a thread pitch angle, wherein the threaded element (1) can be screwed to a screw joint partner having a mating thread by rotation in a tightening circumferential direction (F) and can thereby be displaced in an axial displacement direction (T) oriented along the longitudinal center axis (L) onto a support section (17) of the screw joint partner or a separate component, and the threaded element (1) having an annular section (8) for the support on the support section (17), and anchoring means (9) for the interlocking anchoring in the support section (17) being realized on the annular section (8) in order to establish an interlocking connection, the anchoring means (9) having several sections (10) which are spaced apart in the tightening circumferential direction (F) and which are preferably disposed so as to be evenly distributed in the circumferential direction, each section (10) comprising a lower forming edge (11) extending in the axial displacement direction (T), a recess (12) being disposed upstream of each section in the tightening circumferential direction (F), the recesses (12) being limited by a wall on a circumferential side opposite to the corresponding section (10) in the tightening circumferential direction (F), the wall having a first wall section (13) realized as a ramp and ascending against the tightening circumferential direction (F) upwards against the axial displacement direction (T) or being composed thereof and each recess (12) being limited by a second wall section (14) of the respective section (10), preferably adjoining the edge (11) and/or the first wall section (13), on the circumferential side opposite to the first wall section (13) realized as a ramp against the tightening circumferential direction (F) the first wall sections (13) preferably realized as, in particular linear, ramps opposite to the sections (10) in the tightening circumferential direction (F) each having a pitch angle (δ) in relation to a radial plane (R) through which the longitudinal center axis (L) passes in the perpendicular direction, the pitch angle (δ) being greater than the thread pitch angle of the thread (5) by an angle between at least 0.5° and not more than 20°, in particular between 1° and not more than 15°, preferably between at least 1.5° and not more than 10°, more preferably between at least 2° and not more than 8°, particularly preferably of at least 2° and not more than 5°, the second wall sections (14) comprising a radius or being realized as a radius, **characterized in that** the sections are forming sections, that the edge is a forming edge and that the recess is disposed so as to receive support section material which is formed by means of the respective forming section.

2. The threaded element according to claim 1,
**characterized in that**
said threaded element is realized as a cap screw, comprising a shaft (20) which has the thread (5) realized as an external thread and which extends along the longitudinal center axis (L) of the cap screw and a screw head (21) which projects beyond the shaft (20) in the radial direction and which preferably has a drive (3) for applying a torque in the tightening circumferential direction (F) and which has an annular shoulder (22) on the bottom side which faces the shaft (20), the annular shoulder (22) realizing the annular section (8) together with the anchoring means (9) for the interlocking anchoring in the support section (17), or that the threaded element (1) is realized as a nut, comprising a nut body (2) having a through opening (4), the thread (5) being realized as an internal thread on the inner circumference of said through opening (4) and the nut body (2) having the annular section (8) comprising the anchoring means (9) on the end face, the nut body (2) preferably having a drive (3), in particular in the form of flat pairs, for applying a torque in the tightening circumferential direction (F).

3. The threaded element according to claim 1 or 2,
**characterized in that**
a supporting surface for supporting the annular section (8) on a support section (17) is exclusively realized by the lower forming edges (11) of the forming sections (10) before the forming sections (10) are molded into the support section (17).

4. The threaded element according to any one of the preceding claims,
**characterized in that**
the lower forming edges (11) extend over the entire radial extension of the annular section in the radial direction or preferably over only a subsection of the radial extension of the annular section (8), in particular from a range between 5 % and 75 %, preferably between 5 % and 50 %, particularly preferably between 5 % and 30 %, more preferably between 5 % and 25 %, particularly preferably between 5 % and 15 %.

5. The threaded element according to any one of the preceding claims,
**characterized in that**
a circumferential angle between two forming edges (11) which are directly adjacent in the circumferential direction is selected from a range between 20° and 40°, in particular between 25° and 35°, and is particularly preferably 30°.

6. The threaded element according to any one of the preceding claims,
**characterized in that**
the forming sections (10) are at least largely, preferably exclusively, realized so as to form, not machine, support section material (18).

7. The threaded element according to any one of the preceding claims,
**characterized in that**
the radius of the second wall section (14) is selected from a range between 15% and 60%, in particular between 20% and 50%, particularly preferably between 25 % and 40 %, more preferably between 28 % and 35 % of the circumferential distance measured in the circumferential direction between two forming edges (11) which are directly adjacent in the circumferential direction and/or of the circumferential extension of the corresponding recess (12) and/or is 33 % of the circumferential distance measured in the circumferential direction between two forming edges (11) which are directly adjacent in the circumferential direction and/or of the circumferential extension of the corresponding recess (12).

8. The threaded element according to any one of the preceding claims,
**characterized in that**
a circumferential extension of the second wall section (14) is selected from a range between 15 % and 60 %, in particular between 20 % and 50 %, particularly preferably between 25 % and 40 %, more preferably between 28 % and 35 % of the distance measured in the circumferential direction between two forming edges (11) which are directly adjacent in the circumferential direction and/or of the circumferential extension of the corresponding recess (12) and/or is 33 % of the circumferential distance measured in the circumferential direction between two forming edges (11) which are directly adjacent in the circumferential direction and/or of the circumferential extension of the corresponding recess (12).

9. The threaded element according to any one of the preceding claims,
**characterized in that**
the threaded element (1) is, preferably exclusively partially, hardened, in particular in such a manner that, in particular the forming edges (11), are, preferably inductively, hardened and/or that the threaded element (1), in particular the forming edges (11), are hardened to a maximum material depth from a range between 0.2 mm and 2.0 mm, preferably between 0.5 mm and 1.0 mm.

10. A connection, comprising a threaded element (1) according to any one of the preceding claims and a screw joint partner, the thread (5) of the threaded element (1) being screwed to a mating thread of the screw joint partner and material of the support section (17) of the screw joint partner or of a component clamped in the axial direction between the screw joint partner and the threaded element (1) being molded into the recesses (12) in order to establish an interlocking connection, the formed material being connected to the unformed material of the support section (17) in a material-fitting manner.

11. The connection according to claim 10,
**characterized in that**
the forming sections (10) of the threaded element (1) are made of a material which is harder than the formed material of the support section (17) which is molded into the at least one recess (12).

12. The connection according to claim 10 or 11,
**characterized in that**
the formed material contacts the respective wall section (13, 14) which is realized as a ramp, in particular over the largest part of the surface extension of said wall section (13, 14), and the radius of the corresponding second wall section (14) of the respective recess (12).

13. The connection according to any one of claims 10 to 12,
**characterized in that**
the interlocking connection is realized in such a manner that, in order to release the interlocking connection, the threaded element (1) can be actuated against the tightening circumferential direction (F) and a breakaway torque can be overcome, the breakaway torque being higher than a release torque of a corresponding connection (16) in which an otherwise identical threaded element (1) has no forming sections (10).

14. The connection according to any one of claims 10 to 13,
**characterized in that**
the interlocking connection is realized in such a manner that, in order to release the interlocking connection, the threaded element (1) can be rotated against the tightening circumferential direction (F) and the component material which is molded into the recess (12) can be shorn.

## Revendications

1. Élément fileté (1), de préférence réalisé comme pièce extrudée à froid en métal, ayant un axe central longitudinal (L), comprenant un filetage (5) qui a un angle d'inclinaison de filetage, l'élément fileté (1) pouvant être vissé avec un partenaire de vissage ayant un contre-filetage par rotation dans une direction circonférentielle de serrage (F) et pouvant ainsi être déplacé dans une direction de déplacement axiale (T) alignée le long de l'axe central longitudinal (L) sur une partie de support (17) du partenaire de vissage ou d'un composant séparé, et l'élément fileté (1) comprenant une partie annulaire (8) servant au support sur la partie de support (17), et des moyens d'armature (9) étant réalisés sur la partie annulaire (8) pour l'ancrage solidaire en forme dans la partie de support (17) afin de réaliser un raccord solidaire en forme, lesdits moyens d'armature (9) comprenant plusieurs parties (10) espacées dans la direction circonférentielle de serrage (F), de préférence reparties de manière régulière dans la direction circonférentielle, chaque partie (10) comprenant un bord de déformation (11) inférieur s'étendant dans la direction de déplacement axiale (T), une cavité (12) étant disposée en amont de chacune des parties (10) dans la direction circonférentielle de serrage (F), les cavités (12) étant limitées par une paroi d'un côté circonférentiel qui est opposé à la partie (10) correspondante dans la direction circonférentielle de serrage (F), la paroi ayant ou étant composée d'une première partie de paroi (13) réalisée comme rampe et montant dans la direction opposée à la direction circonférentielle de serrage (F) vers le haut dans la direction opposée à la direction de déplacement axiale (T) et les cavités (12) étant limitées par une deuxième partie de paroi (14) de la partie (10) respective, de préférence adjacente au bord (11) et/ou à la première partie de paroi (13), du côté circonférentiel qui est opposé à la première partie de paroi (13) réalisée comme rampe dans la direction opposée à la direction circonférentielle de serrage (F), chaque première partie de paroi (13) opposée aux parties (10) dans la direction circonférentielle de serrage (F) et réalisée comme rampe, notamment linéaire, a un angle d'inclinaison (δ) par rapport à un plan radial (R) traversé par l'axe central longitudinal (L) dans la direction perpendiculaire qui est plus grand que l'angle d'inclinaison de filetage (5) d'un angle entre 0,5° au minimum et 20° au maximum, notamment entre 1° au minimum et 15° au maximum, de préférence entre 1,5° au minimum et 10° au maximum, plus préférentiellement entre 2° au minimum et 8° au maximum, particulièrement préféré de 2° au minimum et 5° au maximum, et les deuxièmes parties de paroi (14) comprenant un rayon ou étant réalisées comme rayon, **caractérisé en ce que** les parties sont des parties de déformation, que le bord est un bord de déformation et que la cavité est disposée afin de recevoir de matériau de partie de support qui est déformé au moyen de la partie de déformation respective.

2. Élément fileté selon la revendication 1,
**caractérisé en ce que**
ledit élément fileté est réalisé comme vis à tête, comprenant une tige (20) qui a un filetage extérieur comme filetage (5) et qui s'étend le long de l'axe central longitudinal (L) de la vis à tête et une tête de vis (21) qui dépasse la tige (20) dans la direction radiale et qui a, de préférence, un entraînement (3) afin d'appliquer un couple dans la direction circonférentielle de serrage (F) et qui a un épaulement annulaire (22) qui réalise la partie annulaire (8) conjointement avec les moyens d'armature (9) pour l'ancrage solidaire en forme dans la partie de support (17) du côté inférieur qui fait face à la tige (20), ou que l'élément fileté (1) est réalisé comme écrou, comprenant un corps d'écrou (2) ayant une ouverture de passage (4), le filetage (5) étant réalisé comme filetage intérieur sur sa circonférence intérieure et le corps d'écrou ayant la partie annulaire (8) et les moyens d'armature (9) sur la face frontale, le corps d'écrou (2) ayant, de préférence, un entraînement (3), notamment en forme des paires de surfaces de clés, afin d'appliquer un couple dans la direction circonférentielle de serrage (F).

3. Élément fileté selon la revendication 1 ou la revendication 2,
**caractérisé en ce**
**qu'**une surface de support destinée à supporter la partie annulaire (8) sur une partie de support (17) est réalisé exclusivement par les bords de déformation (11) inférieurs des parties de déformation (10) avant le moulage des parties de déformation (10) dans la partie de support (17).

4. Élément fileté selon l'une quelconque des revendications précédentes,
**caractérisé en ce que**
les bords de déformation (11) inférieurs s'étendent sur l'extension radiale entière de la partie annulaire dans la direction radiale ou, de préférence, ne s'étendent que sur une section de l'extension radiale de la partie annulaire (8), notamment d'une plage entre 5 % et 75 %, de préférence entre 5 % et 50 %, particulièrement préféré entre 5 % et 30 %, plus préférentiellement entre 5 % et 25 %, particulièrement préféré entre 5 % et 15 %.

5. Élément fileté selon l'une quelconque des revendications précédentes,
**caractérisé en ce**
**qu'**un angle circonférentiel entre deux bords de déformation (11) qui sont directement adjacents dans la direction circonférentielle est choisi d'une plage entre 20° et 40°, notamment entre 25° et 35°, et est particulièrement préféré 30°.

6. Élément fileté selon l'une quelconque des revendications précédentes,
**caractérisé en ce que**
les parties de déformation (10) sont au moins principalement, de préférence exclusivement, réalisées pour la déformation, pas pour l'usinage, du matériau de partie de support (18).

7. Élément fileté selon l'une quelconque des revendications précédentes,
**caractérisé en ce que**
le radius de la deuxième partie de paroi (14) est choisi d'une plage entre 15% et 60%, notamment entre 20% et 50%, particulièrement préféré entre 25 % et 40 %, plus préférentiellement entre 28 % et 35 % de la distance circonférentielle mesurée dans la direction circonférentielle entre deux bords de déformation (11) qui sont directement adjacents dans la direction circonférentielle et/ou de l'extension circonférentielle de la cavité (12) correspondante et/ou est 33 % de la distance circonférentielle mesurée dans la direction circonférentielle entre deux bords de déformation (11) qui sont directement adjacents dans la direction circonférentielle et/ou de l'extension circonférentielle de la cavité (12) correspondante.

8. Élément fileté selon l'une quelconque des revendications précédentes,
**caractérisé en ce que**
l'extension circonférentielle de la deuxième partie de paroi (14) est choisie d'une plage entre 15% et 60%, notamment entre 20 % et 50 %, particulièrement préférée entre 25 % et 40 %, plus préférentiellement entre 28 % et 35 % de la distance mesurée dans la direction circonférentielle entre deux bords de déformation (11) qui sont directement adjacents dans la direction circonférentielle et/ou de l'extension circonférentielle de la cavité (12) correspondante et/ou est 33 % de la distance circonférentielle mesurée dans la direction circonférentielle entre deux bords de déformation (11) qui sont directement adjacents dans la direction circonférentielle et/ou de l'extension circonférentielle de la cavité (12) correspondante.

9. Élément fileté selon l'une quelconque des revendications précédentes,
**caractérisé en ce que**
l'élément fileté (1) est, de préférence exclusivement partiellement, durci, notamment de telle manière que, notamment les bords de déformation (11), sont durcis, de préférence de manière inductive, et/ou l'élément fileté (1), notamment les bords de déformation (11) sont durcis à une profondeur de matériau maximale d'une plage entre 0,2 mm et 2,0 mm, de préférence entre 0,5 mm et 1,0 mm.

10. Raccord, comprenant un élément fileté (1) selon l'une quelconque des revendications précédentes et un partenaire de vissage, le filetage (5) de l'élément fileté (1) étant vissé avec un contre-filetage du partenaire de vissage et de matériau de la partie de support (17) du partenaire de vissage ou d'un composant serré axialement entre le partenaire de vissage et l'élément fileté (1) est moulé dans les cavités (12) afin de réaliser un raccord solidaire en forme, le matériau déformé étant relié au matériau non-déformé de la partie de support (17) par une liaison par matière.

11. Raccord selon la revendication 10,
**caractérisé en ce que**
les parties de déformation (10) de l'élément fileté (1) sont formées d'un matériau qui est plus dur que le matériau déformé de la partie de support (17) qui est moulé dans l'au moins une cavité (12).

12. Raccord selon la revendication 10 ou la revendication 11,
**caractérisé en ce que**
le matériau déformé contacte la partie de paroi (13, 14) respective qui est réalisée comme rampe, notamment sur la majeure partie de l'extension de surface de ladite partie de paroi (13, 14), et le radius de la deuxième partie de paroi (14) correspondante de la cavité (12) respective.

13. Raccord selon l'une quelconque des revendications 10 à 12,
**caractérisé en ce que**
le raccord solidaire en forme est réalisé de telle manière que l'élément fileté (1) peut être actionné dans la direction opposée à la direction circonférentielle de serrage (F) et un couple de décollage peut être vaincu afin de détacher le raccord solidaire en forme, le couple de décollage étant plus grand qu'un couple de desserrage d'un raccord (16) respectif, un élément fileté (1) par ailleurs identique du raccord (16) n'ayant aucune partie de déformation (10).

14. Raccord selon l'une quelconque des revendications 10 à 13,
**caractérisé en ce que**
le raccord solidaire en forme est réalisé de telle manière que l'élément fileté (1) peut être tourné dans la direction opposée à la direction circonférentielle de serrage (F) afin de détacher le raccord solidaire en forme et le matériau de composant moulé dans la cavité (12) peut être cisaillé.
